Europäisches Patentamt

European Patent Office

Office européen des brevets

(19)

(11) Veröffentlichungsnummer : **0 148 974**
**B1**

(12) **EUROPÄISCHE PATENTSCHRIFT**

(45) Veröffentlichungstag der Patentschrift :
27.07.88

(51) Int. Cl.⁴ : **F 16 J 15/34**

(21) Anmeldenummer : 84105926.4

(22) Anmeldetag : 24.05.84

(54) **Flüssigkeitsgesperrte Wellendichtung mit reduzierter Gleitringtemperatur.**

(30) Priorität : 11.08.83 DE 3329034

(43) Veröffentlichungstag der Anmeldung :
24.07.85 Patentblatt 85/30

(45) Bekanntmachung des Hinweises auf die Patenterteilung : 27.07.88 Patentblatt 88/30

(84) Benannte Vertragsstaaten :
**CH DE FR GB IT LI NL SE**

(56) Entgegenhaltungen :
DE-A- 2 244 213
DE-B- 2 510 196
DE-U- 1 982 170
US-A- 2 886 352
US-A- 3 926 443
US-A- 4 199 152

(73) Patentinhaber : **MAN GUTEHOFFNUNGSHÜTTE GMBH**
**Bahnhofstrasse, 66 Postfach 11 02 40**
**D-4200 Oberhausen 11 (DE)**

(72) Erfinder : **Kotzur, Joachim, Dr.-Ing.**
**Holtkampstrasse 18**
**D-4200 Oberhausen 11 (DE)**

Jouve, 18, rue St-Denis, 75001 Paris, France

**Beschreibung**

Die Erfindung betrifft eine flüssigkeitsgesperrte Wellendichtung mit einem mit der Maschinendrehzahl rotierenden Dichtring und einem nachgiebig axial beweglichen und dichtend mit dem Gehäuse verbundenen, nicht drehenden Abdichtungsring, wobei der rotierende Dichtring aus einem Material mit hoher Wärmeleitfähigkeit, großer Festigkeit (Reißlänge) und großer Oberflächenhärte im Dichtungsbereich, aus einer gehärteten Kupfer-Beryllium-Legierung (1 - 4 % Beryllium, 0,1 - 0,5 % Kobalt) besteht.

Wellendichtungen vorgenannter Gattung werden zur Abdichtung zwischen der rotierenden Welle und dem Gehäuse von Fluidenergiemaschinen für die Verdichtung und Entspannung von Gasen verwendet. Bei den hierbei auftretenden Gleitgeschwindigkeiten zwischen dem rotierenden und nicht rotierenden axialen Dichtring und der zur Abdichtung erforderlichen axialen Anpreßkraft wird eine hohe Reibungsenergie bewirkt, welche in bekannter Weise durch einseitige Kühlung der Dichtringe mit einer Sperrflüssigkeit abgeführt wird. In geringem Maße erfolgt auch eine Wärmeabfuhr, insbesondere jedoch eine Schmierung der Gleitflächen der Dichtringe durch eine geringe Menge der Sperrflüssigkeit, welche mit Überdruck gegenüber dem abzudichtenden Gasraum als Leckflüssigkeit in den Gasraum eintritt.

Der nicht drehende Abdichtungsring ist bei bekannten Ausführungen z. B. ein Kohlegleitring. Der umlaufende Dichtring wird zur Erzielung guter Gleiteigenschaften bei gleichzeitig hoher Festigkeit des Umlaufringes aus Stahl mit harter Gleitflächenauflage, z. B. Stellit oder Chrom, ausgeführt.

Bei hohen Gleitgeschwindigkeiten und Flächenpressungen können sich so hohe Temperaturen in der Gleitfläche ergeben, daß die Sperrflüssigkeit, z. B. Öl, sich an der Gleitfläche zersetzt und unerwünschte Ablagerungen bildet, welche einen erhöhten Lecköolabfluß in den Gasraum bewirken.

In der DE-B-2 510 196 ist eine gasgesperrte, berührungsfreie Wellendichtung mit einem mit der Maschinendrehzahl rotierenden Dichtring und einem im Gehäuse elastisch an gasdichten Wänden aufgehängten Gegenring bekannt, bei der rotierende Dichtring aus gehärtetem Berylliumkupfer mit einem Gehalt von 1 bis 4 % Beryllium und 0,1 bis 0,5 % Kobalt.

Es ist Aufgabe der Erfindung, die bekannten Wellendichtungen derart zu verbessern, daß im Dichtspalt niedrigere Temperaturen auftreten. Dies wird erfindungsgemäß dadurch erreicht, daß bei einer flüssigkeitsgesperrten Wellendichtung nach dem Oberbegriff des Hauptanspruches auf dem rotierenden Dichtring ein oder mehrere Schwimmringe mit zur Wellenachse konzentrischem Dichtspalt angeordnet sind.

Besonders vorteilhafte Ausführung besteht darin, daß der Umlaufring zusätzlich in einer auf einem Kühlflüssigkeitsfilm schwimmenden Büchse, kurz Schwimmring genannt, läuft, in der der Kühlflüssigkeitsdruck auf den außen an dem Schwimmring anliegenden Druck, im allgemeinen den Atmosphärendruck, abgebaut wird. Der intensive Kühlflüssigkeitsstrom durch den Schwimmring führt neben der im Schwimmring selbst erzeugten Reibungsenergie bei der guten Wärmeleitfähigkeit des Kupfer-Beryllium-Umlaufringes auch Wärme aus dem Bereich der Gleitringdichtung ab.

Als Werkstoff des nicht umlaufenden Dichtringes können die üblichen Werkstoffe verwendet werden. Besonders bewährt hat sich hierfür in Verbindung mit dem Kupfer-Beryllium-Umlaufring ein nicht umlaufender Gleitring aus Hartbrand-Kohle. Mit dieser Materialpaarung wurden sehr gute Gleiteigenschaften bei gleichzeitig guter Leckflüssigkeitsbeschaffenheit (keine Rückstände) im Verlaufe der Erprobung der Erfindung festgestellt.

Als Material für den Umlaufring kommt auch Aluminium oder eine Aluminium-Legierung, wie AlMg 3 mit oxydierter Oberfläche, in Betracht.

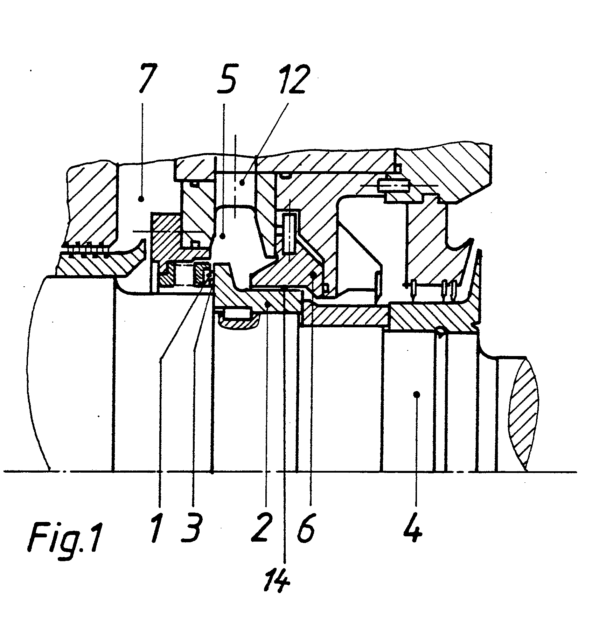

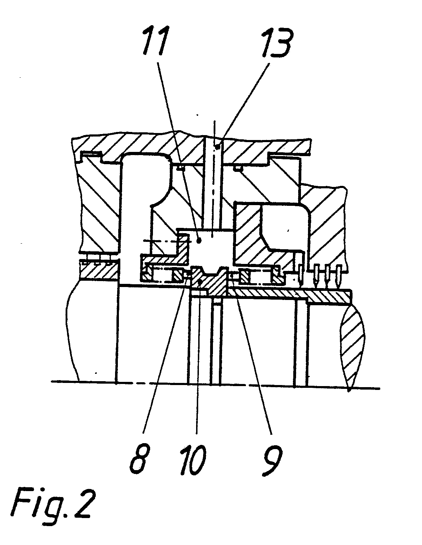

Im folgenden werden an Hand der Schnittzeichnungen (Fig. 1 und Fig. 2) zwei Anwendungsbeispiele der Erfindung erläutert.

In Fig. 1 wird der Kohlegleitring 1 axial gegen den mit der Welle umlaufenden Dichtring 2 aus Kupfer-Beryllium gepreßt. Die in dem Dichtspalt 3 entstehende Reibungsenergie wird nur in sehr geringem Maße über den Kohlegleitring 1, in hohem Maße über den Umlaufring 2 an die Welle 4 und die Sperrflüssigkeit (hier Öl) in der Kammer 5 und den Schwimmring 6 abgeführt.

Das in Kammer 5 über Bohrungen 12 eintretende Sperröl wird zur Kühlung zum Teil direkt über am Umfang versetzte Bohrungen 12 aus dieser Kammer wieder abgeführt, zum großen Teil fließt es über den Schwimmring 6 zur Atmosphärenseite. Eine sehr geringe Lecköolmenge gelangt über den Dichtspalt 3 in den Gasraum 7.

In Fig. 2 sind die Kohlegleitringe 8 und 9 beidseitig des mit der Welle umlaufenden Dichtringes 10 aus Kupfer-Beryllium angeordnet. Die Sperrölzu- und -abfuhr erfolgt, abgesehen von einer kleinen Lecköolmenge, durch die Dichtspalte der Kohlegleitringe 8 und 9 aus der Kammer 11 über Bohrungen 13.

**Patentansprüche**

1. Flüssigkeitsgesperrte Wellendichtung mit einem mit der Maschinendrehzahl rotierenden Dichtring (2) und einem nachgiebig axial beweglichen und dichtend mit dem Gehäuse verbundenen, nicht drehenden Abdichtungsring (1), wobei der rotierende Dichtring (2) aus einem Material mit hoher Wärmeleitfähigkeit, großer Festigkeit (Reißlänge) und großer Oberflächenhärte im Dichtungsbereich, aus einer gehärteten Kupfer-Beryllium-Legierung (1-4 % Beryllium, 0,1-0,5 % Kobalt) besteht, dadurch gekennzeichnet, daß auf dem rotierenden Dichtring (2) ein oder mehrere Schwimmringe (6) mit zur Wellenachse (4) konzentrischen Dichtspalt (14) angeordnet sind.

2. Flüssigkeitsgesperrte Wellendichtung nach Anspruch 1, dadurch gekennzeichnet, daß der rotierende Dichtring (2) aus Aluminium oder einer Aluminiumlegierung mit durch Oxydieren gehärteter Oberfläche besteht.

3. Flüssigkeitsgesperrte Wellendichtung nach den Ansprüchen 1 und 2, dadurch gekennzeichnet, daß der nicht drehende Abdichtungsring (1, 8, 9) aus einer Gleitkohle besteht.

## Claims

1. Fluid-blocked shaft seal with a seal (2) rotating at the rotational speed of the machine and a non-rotating flexible sealing ring (1) which is axially moveable and connected to the housing with sealing, whereby the rotating seal (2) is formed from a material with a high degree of thermal conductivity, a high degree of strength (tearing length) and a high degree of surface hardness in the sealing area, which is made of a hardened copper-beryllium alloy (1-4 % beryllium, 0.1-0.5 % cobalt), characterised in that one or several floating rings (6) with a sealing gap (14) which is concentric with the shaft axis (4) are disposed on the rotating seal (2).

2. Fluid-blocked shaft seal according to claim 1, characterised in that the rotating seal (2) is made of aluminium or an aluminium alloy with a surface hardened by oxidizing.

3. Fluid-blocked shaft seal according to claims 1 and 2, characterised in that the non-rotating sealing ring (1, 8, 9) is made of a sliding carbon.

## Revendications

1. Joint de traversée d'arbre à barrière de liquide comportant un joint d'étanchéité (2) tournant à la vitesse de rotation de la machine et un joint d'étanchéité (1) non rotatif, mobile axialement de manière souple et qui est relié de façon étanche au carter, le joint d'étanchéité rotatif (2) étant réalisé en un matériau à conductibilité thermique élevée, à grande résistance (longueur de rupture) et grande dureté de surface dans la zone d'étanchéité, en un alliage de cuivre au béryllium durci (1-4 % béryllium, 0,1-0,5 % cobalt), joint caractérisé en ce que le joint d'étanchéité (2) rotatif comporte une ou plusieurs bagues flottantes (6) avec un intervalle d'étanchéité (14) concentrique à l'axe (4) de l'arbre.

2. Joint de traversée d'arbre à barrière de liquide selon la revendication 1, caractérisé en ce que le joint d'étanchéité rotatif (2) est réalisé en aluminium ou en un alliage d'aluminium dont la surface a été durcie par oxydation.

3. Joint de traversée d'arbre à barrière de liquide selon les revendications 1 et 2, caractérisé en ce que le joint d'étanchéité (1, 8, 9) non rotatif est en carbone de glissement.

Fig.1

*Fig.2*